# EUROPEAN PATENT APPLICATION

(11) **EP 1 695 619 A1**
(43) Date of publication of application: **30.08.2006**
(21) Application number: 04735899.9
(22) Date of filing: 03.06.2004
(51) Int. Cl.: A01K 95/00

(54) **SINKER FOR FISHING TACKLE**

(30) Priority: 16.12.2003 ES 200302957
(71) Applicant: Sator & Fata, S.L., 17190 Salt (Girona) (ES)
(72) Inventor: SUAREZ CRESPO, Juan José, E-17190 SALT (Girona) (ES)
(74) Representative: Hernán-Carrillo Portolés, Santiago
(86) International application number: PCT/ES2004/000253
(87) International publication number: WO 2005/060742

(57) **Abstract**

Sinking apparatus for fishing tackles, which is made up of rock salt or gem salt (12), of non contaminating nature, in order to provide them with the necessary weight to help to hurl them a certain distance away, and to subsequently sink them in the water.

## Description

### OBJECT OF THE INVENTION

As is indicated by its title, the present invention refers to a sinking apparatus for fishing tackles, of the type intended to form part of the fishing tackles so as to provide them with the necessary weight that helps to hurl them a certain distance away, and subsequently sink them in the water.

### SCOPE OF THE INVENTION

This sinking apparatus is applicable in different fishing tackles in use, both for coastal fishing with rods, and for fishing from a boat.

### BACKGROUND OF THE INVENTION

Currently the sinking apparatus for fishing tackles are comprised of lead parts of different shapes and that present either a buttonhole or a longitudinal orifice for passing the fishing line of the fishing tackle.

The use of these lead sinking apparatus presents several problems, among them we can point out the contaminating character of lead, the possibility of the fact that the fishing tackle be broken when the lead is caught on at the bottom of the sea, which is usual when fishing is carried out in rocky sea beds, and the reduction of the number of captures due to the presence of the lead part in a zone next to the bait

### DESCRIPTION OF THE INVENTION

In order to solve the indicated problems, a sinking apparatus has been devised for fishing tackles, that is the object of the invention, and that presents constructive particularities orientated towards the provision of sufficient weight for the tackle for it to be hurled and sunk in the water, which makes up an environmentally friendly element, that is to say, non contaminating, as occurs with conventional leads and to favour the approaching of the fish to the bait, consequently increasing the number of captures.

According to the invention, this sinking apparatus is comprised of a conglomeration of crystallized soluble products, of non contaminating nature, which permits the sinking apparatus to provide the fishing tackle with sufficient weight to be hurled and sunk in the water.

The composition of the sinking apparatus, based on crystallized soluble products, determines the fact, that once the tackle is submerged, the sinking apparatus progressively dissolves in the water, remaining diluted in the same.

As has been previously indicated, the crystallized, soluble products that make up the sinking apparatus, shall be comprised of non contaminating materials, and may include crystallized sodium chloride (marine salt) or any other crystallized product, such as common salt, sugar, etc.

In this invention it has been provided, that the conglomeration of crystallized products that make up the sinking apparatus, may include liquid or solid additives that provide specific odours or tastes in order to favour the approach of fish to the zone in which the sinking apparatus and the tackle bait is to be found, thus, this sinking apparatus contributes to the increase in the number of captures.

### DESCRIPTION OF THE DRAWINGS

In order to complement the description that is being represented, and with the purpose of aiding to a better understanding of the characteristics of the invention, the present descriptive specification is enclosed with a drawing, forming integral part of the same, and in which, with exemplary and non limitative character, the following have been represented:

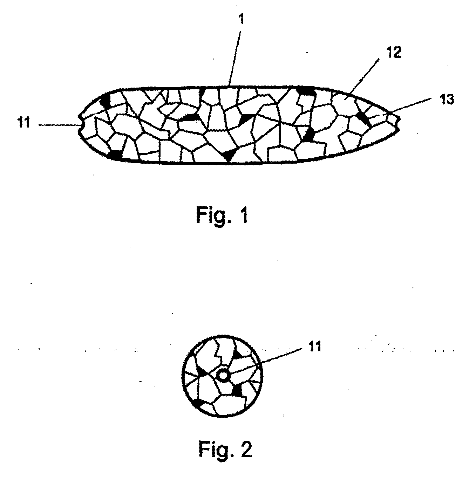

Figure 1 shows an elevational view of an embodiment example of the sinking apparatus for fishing tackles provided with a longitudinal orifice for passing the bait through.
Figure 2 shows a profiled view of the sinking apparatus of the previous Figure in which the longitudinal orifice, for passing the bait through, can be observed.

### PREFERRED EMBODIMENT OF THE INVENTION

In the embodiment example, shown in the figures, the sinking apparatus, referenced as a whole as (1), presents an appreciably cylindrical body with rounded ends, and is provided with a longitudinal orifice for passing the tackle bait through.

As can be observed in said figures, the sinking apparatus (1) is make up of a plurality of crystallized soluble products (12) of non contaminating character, preferably salt or sugar; also including in this specific embodiment example, certain additives (13) that may be pheromones, fish oils or any other that provide the sinking apparatus with appropriate odours or tastes that attract the fish.

Once the nature of the invention has been sufficiently described, together with a preferred exemplary embodiment of the same, it must be pointed out, for applicable purposes, that the materials, shape, size and arrangement of the described elements may be modified, provided this does not involve an alteration of the essential characteristics of the invention that is claimed as follows:

## Claims

1. Sinking apparatus for fishing tackles, of the type intended to be included in fishing tackles so as to provide them with the necessary weight that helps to hurl them a certain distance away, and to subsequently sink them in the water, **characterized in that** it is made up of a conglomerate cristallized soluble products (12), of no contaminating nature.

2. Sinking apparatus according to the previous claim, **characterized in that** the conglomerate of cristallized products (12) can incorporate liquid or solid additive (13) to provide the sinking apparatus with certain odours or smells for the approach of fishes.
